# EUROPEAN PATENT SPECIFICATION

(11) **EP 4 316 225 B1**
(45) Date of publication and mention of the grant of the patent: **24.09.2025**
(21) Application number: 23189191.2
(22) Date of filing: 02.08.2023
(51) Int. Cl.: A01B 63/10, A01B 73/04

(54) **AGRICULTURAL WORKING DEVICE**
LANDWIRTSCHAFTLICHES ARBEITSGERÄT
DISPOSITIF DE TRAVAIL AGRICOLE

(30) Priority: 03.08.2022 IT 202200016473
(43) Date of publication of application: 07.02.2024
(73) Proprietor: Torrico S.r.l., 36053 Gambellara (VI) (IT)
(72) Inventor: PEGORARO, Luciano, 36053 GAMBELLARA (VI) (IT); ZAMBON, Matteo, 36053 GAMBELLARA (VI) (IT)
(74) Representative: Burchielli, Riccardo

(56) References cited:
- EP-A1- 4 104 654
- GB-A- 1 253 937
- US-A- 5 524 712
- US-A1- 2008 093 093
- US-A1- 2018 239 360
- US-A1- 2020 390 018
- US-B1- 6 382 326

## Description

The present invention relates to an agricultural processing machine.

The invention falls in the technical field of tools and equipment for processing the soil and in particular in the field of agricultural subsoilers.

More in particular, the invention relates to an agricultural soil processing machine, comprising a plurality of tools, arranged on at least one row, in a direction substantially orthogonal to the advancement of the machine; each of the tools consists of an arm, provided at one end with a tool, adapted to penetrate the soil, in order to perform an operation of breaking the sods at an adjustable depth.

The invention further relates to a soil processing device which can be attached to an agricultural vehicle.

Advantageously, the agricultural processing machine according to the invention comprises a plurality of foldable sections, each in turn comprising a plurality of agricultural tools, such as shanks.

In particular, these improved design and implementation features allow the agricultural machine object of the present invention to comprise a greater number of sections which can be closed in a compact manner, allowing road transport according to current regulations.

There is an increasing need to perform rational soil processing, both in depth and in terms of surface finishing, while obtaining advantages in terms of the compact structure of the agricultural machine, energy and labour costs compatible with the market, as well as safety for the user during the processing.

In this sense, the use of traditional ploughs is increasingly giving way to the use of more functional equipment and/or machines.

In particular, it is common practice in agriculture to use agricultural apparatuses generically defined as subsoilers, which are associated with an agricultural tractor.

Such subsoilers comprise a plurality of work elements fixed to a support frame of the agricultural tractor and arranged to carry out the soil processing procedures, such as underground subsoiling and numerous other operations.

The frame of the subsoilers can be carried directly by the agricultural tractor or can be towed by it, for example by means of wheels.

The work tools or shanks, which are connected to the subsoilers, can have different shapes and dimensions on the basis of the tasks to be carried out, in any case they generally have an elongated and/or curved shape.

The known subsoilers for agricultural processing can have a frame designed to comprise two or three sections; in particular, the three-section structure is intended for very high powers and for large work areas.

The disadvantage of the three-section frames is that, according to the prior art, in a folded configuration, such a structure exceeds the size of three metres which represents the maximum limit allowed for road traffic.

Such devices are thus not authorised for road transport and circulation in public places.

A second disadvantage of agricultural apparatuses such as subsoilers, according to the prior art, is that said apparatuses are not always designed to be folded and obtain configurations more suitable for transport.

Finally, a last disadvantage of the agricultural subsoilers according to the prior art is the poor ability of hydropneumatic devices or devices of other type to allow the folding of work tools or frames.

The relevant prior art also comprises the patent documents EP4104654A1, US2020/390018A1, US2008/093093A1 and US2018/239360A1.

Therefore, the object of the present invention is to obviate the drawbacks of the prior art mentioned above and, in particular, to make an agricultural machine capable of managing high work areas, but at the same time of closing in a folded configuration within the sizes which allow road use.

Another object of the present invention is to provide an agricultural machine with a hydraulic or hydropneumatic damping system to allow users to overcome obstacles.

Another object of the present invention is to provide an agricultural machine with a hydraulic system adapted to compact the transported agricultural apparatus. Another object of the present invention is to provide an agricultural machine capable of being configured in working mode and in closed mode on the basis of the action of the hydraulic system.

Another object of the present invention is to provide an agricultural machine capable of using different types of agricultural apparatuses and tools and of performing processes on work areas of different extension on the basis of the number of sections comprised in the frame of the machine.

Finally, the not least object of the present invention is to provide an agricultural machine provided with a single hydraulic system, which allows the retraction of the tools, the lifting thereof in the presence of obstacles and the folding of the agricultural apparatus transported by the machine itself.

The present invention will now be described, in an exemplary but non-limiting manner, according to a preferred embodiment thereof, with the aid of the attached drawings, in which:

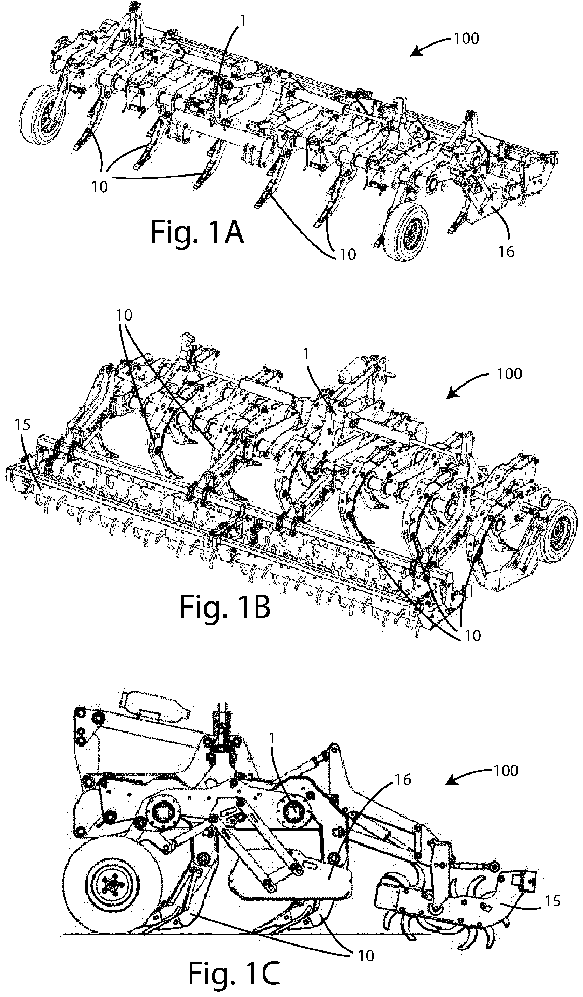

- Figures 1A and 1B are two perspective views of an agricultural processing apparatus adapted to be transported by an agricultural tractor, according to the invention, in an embodiment with three sections;
- Figure 1C is a side view of the agricultural processing apparatus referred to in figures 1A-1B;

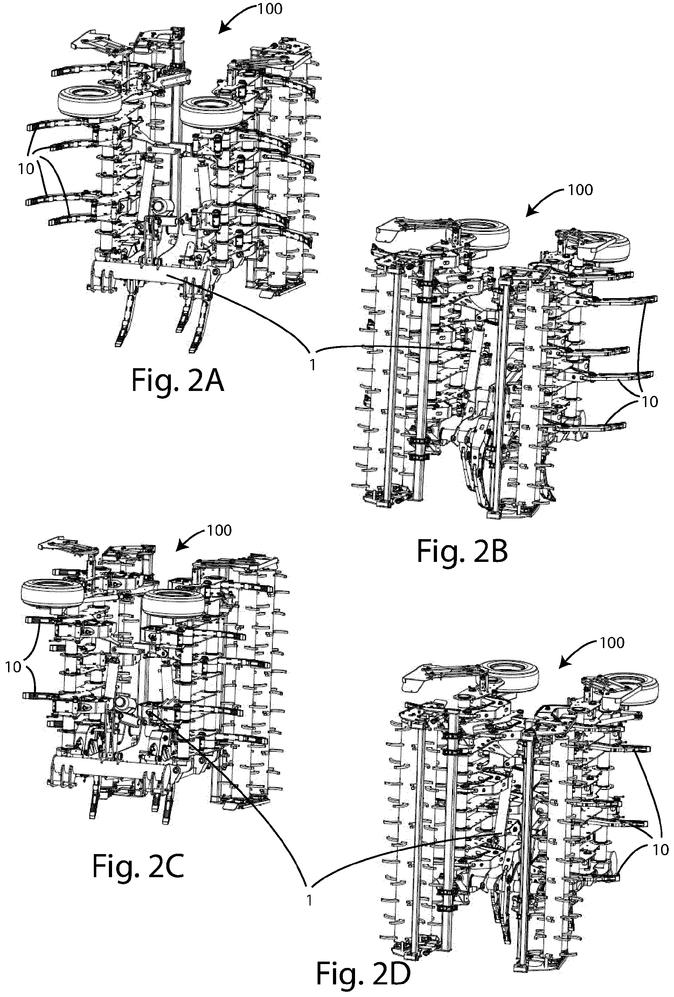

- Figures 2A and 2B are two perspective views of the agricultural processing apparatus according to the invention, in a folded configuration with the tools not retracted;
- Figures 2C and 2D are two perspective views of the agricultural processing apparatus according to the invention, in a folded configuration with the tools retracted;

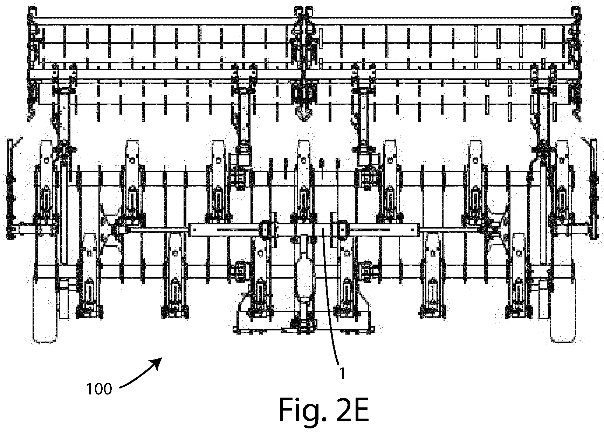

- Figure 2E is a top view of the agricultural processing apparatus according to the invention, in a working configuration;
- Figure 3 is a schematic view of a detail of the hydraulic system used in the agricultural machine according to the invention;

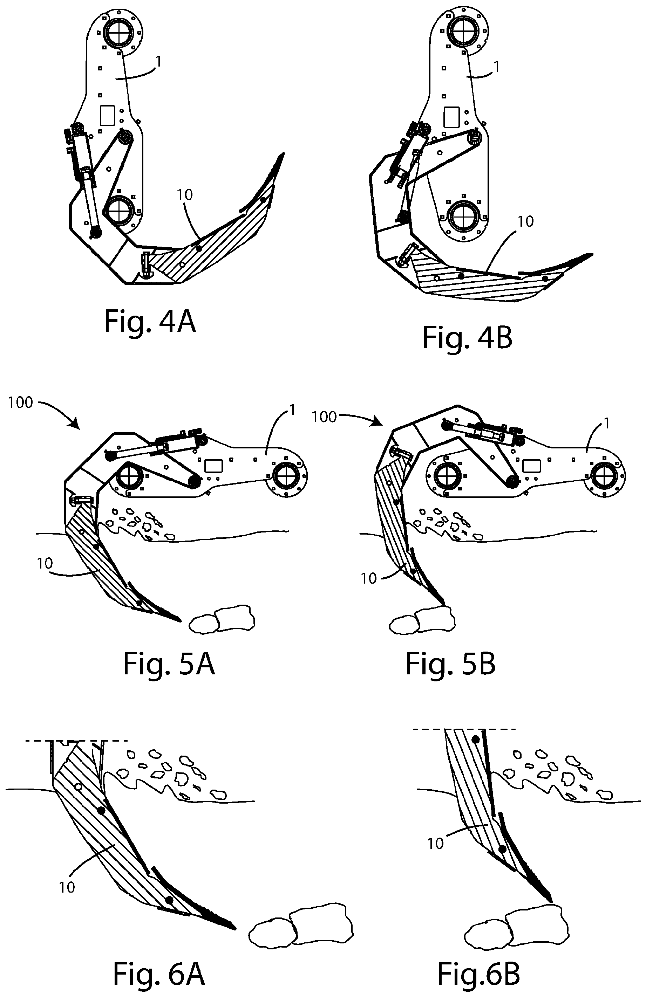

- Figures 4, 4B, 5A, 5B, 6A, 6B show different configurations which a tool of the agricultural apparatus, according to the invention, can assume with respect to the frame of the agricultural machine, during soil processing, as well as the different inclinations and working depths assumed;

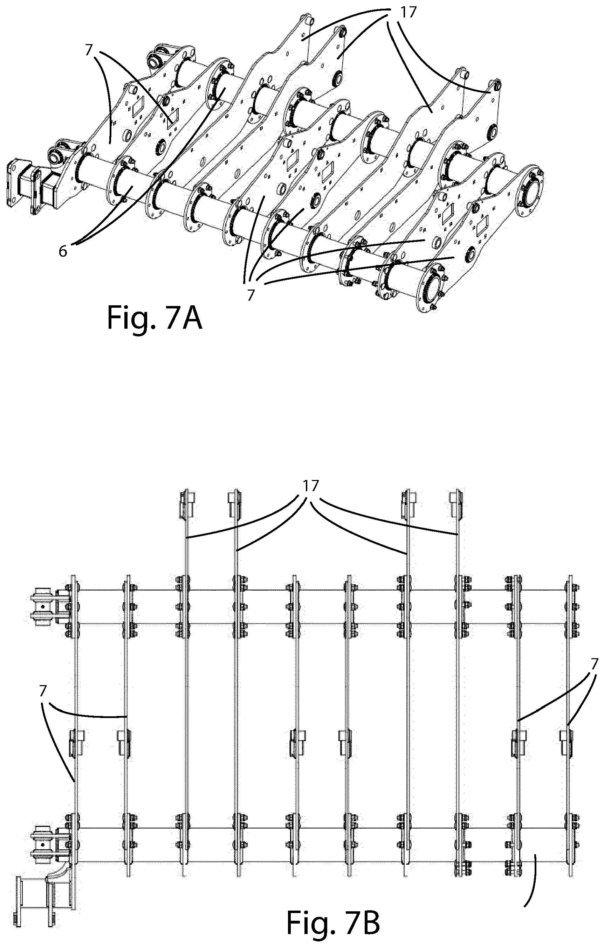

- Figure 7A is a perspective view of a section of the frame of the agricultural apparatus according to the invention;
- Figure 7B a top view of the frame section of figure 7A;

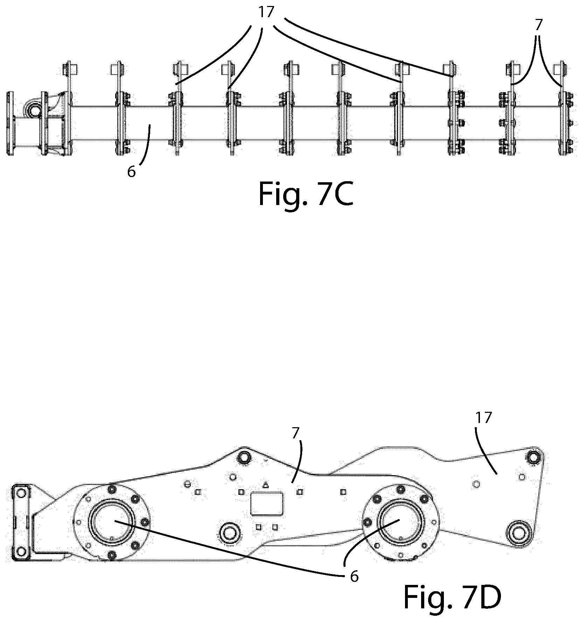

- Figure 7C is a front view of the frame section of figure 7A;
- Figure 7D is a side view of the frame section of figure 7A.

With reference to the above figures, the agricultural machine according to the invention comprises an agricultural tractor (not visible in the figures) and an agricultural processing apparatus, such as an agricultural subsoiler, which in a first embodiment thereof is generally indicated with the reference number 100.

The subsoiler 100 comprises a foldable frame 1, elements for coupling to the agricultural tractor and tools or shanks 10, optionally removable and interchangeable, chosen according to the work needs.

Advantageously, the frame 1 consists of a central portion comprising the coupling elements to the agricultural tractor and at least two opposite side sections, movable from a closed or resting configuration to an open or working configuration.

In particular, in the working configuration, such sections are arranged in an aligned and substantially horizontal manner, while in a folded configuration, the sections are arranged in a raised, substantially vertical position, so as to be parallel to each other and decrease the horizontal dimensions of the subsoiler 100.

The movement of the sections relative to the frame 1 is obtained by means of hydraulic actuators, typically hydraulic pistons provided with double-acting check valves.

Even more advantageously, mechanical devices are provided for stopping and locking the side sections to keep them in position even in the event of malfunction of the hydraulic actuators.

In the described embodiments, the side sections and the central part of the frame 1 comprise at least one pair of metal profiles 6 having the support function for the tools or shanks 10.

By way of example, the metal profiles 6 are formed by a round tubular unit around which perforated plates are welded, with certain spacing, to allow the stability and correct operation of the section itself.

Advantageously, the frame 1 also comprises further reinforcement elements or longitudinal plates 7, 17 joined transversely to the pair of metal profiles 6 and arranged so as to be superimposed and/or interposed on the metal profiles 6 themselves.

In particular, such further reinforcement elements or longitudinal plates 7, 17 are fixed to the metal profiles 6, for example by means of bolts.

Advantageously, the longitudinal plates 7, 17 are arranged perpendicularly to the metal profiles 6 so as to allow the correct positioning and attaching of the tools or shanks 10.

In detail, the longitudinal plates 7 and 17 are shaped with lasers, with suitable perforation to be able to be coupled to the round flanges of the profiles 6.

In particular, thanks to this particular arrangement of the longitudinal plates 7, 17 it is possible, with the same height of the frame 1 from the ground, to increase the processing depth.

Advantageously, with the creation of the sections of the frame 1 as previously described, it is possible to:
- simplify and standardise the welding process of the frame 1;
- increase the ease of repair and/or replacement of a single longitudinal plate 7, 17;
- allow modularity in the construction of the frame 1 in different machines or devices;
- limit welding deformations thanks to the use of elements such as bolted joints;
- optimise the processes and the painting speed;
- modify the resistance of the bolted joints by modifying the type or resistance class thereof;
- increase the resistance of the frame 1 due to the greater moment of inertia of the beams and the large diameter on which the bolted joints are positioned.

Still advantageously, this shape of the side sections, with few standardised and modular elements, allows to create the subsoiler 100 at reduced costs and with elementary welding and assembly operations.

Furthermore, advantageously, means for retracting the tools 10 in the event of an obstacle and for adjusting the depth and working inclination of the tools 10 is associated with each side section of the subsoiler 100, as better described below.

The fact of being able to increase the soil processing depth without modifying the height from the ground of the side sections of the subsoiler 100 allows to reduce the transverse dimensions of the frame 1 in a folded configuration.

Advantageously, it is also possible to position stops in predetermined positions and, thereby, it is possible to change the working depth or the inclination of the tool 10 with respect to the ground.

In addition, the subsoiler 100 can be provided with side strips 16 to prevent the exit of sods laterally.

The adjustment of the working depth of the tools 10 advantageously occurs with reference to the position of a rear roller 15, in a position tangent to the soil level.

As mentioned, it is possible to adjust the tools 10 in the soil in depth; moreover, the tools 10 can be retracted, at least partially, in the event of encountering an obstacle, so as to overcome it and thus avoid unwanted contacts or entanglements in the soil and preserving the frame from overloads.

Still advantageously, according to the invention, it is possible to perform, independently of the previous adjustments, the folding of the sections of the subsoiler 100 and the retraction of the tools 10.

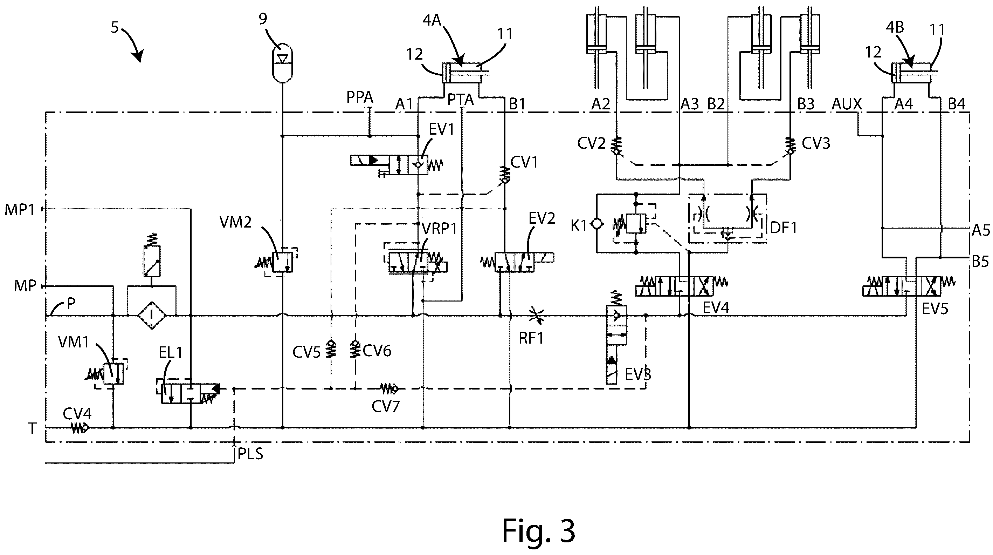

The aforementioned functions are performed thanks to the use of a single hydraulic system 5, shown in detail in the attached fig. 3, which, in preferred but non-limiting embodiments of the invention, is filled with a fluid, in particular oil, and is fed by a hydraulic pump, for example of the variable flow type, which in preferred embodiments is installed on the agricultural tractor, while the hydraulic connection between the tractor and the subsoiler 100 is by means of quick couplings (not visible in the figures).

As mentioned, the hydraulic system 5 allows the following actions to be performed independently of one another:
- retracting the tools 10 to overcome an obstacle;
- retracting the tools 10 to reduce the road dimensions of the subsoiler 100;
- opening and closing the side sections of the frame 1 of the subsoiler 100;
- adjusting the position of the rollers.

In particular, with regard to the damping and retraction of the tools 10, each tool 10 is connected to a respective double-acting cylinder 4A (comprising a lower chamber 11 and an upper chamber 12), which, in the event of overload due to encountering an obstacle, can retract allowing the tool 10 to exit the soil in order to be able to climb over the obstacle, causing the fluid contained in its upper chamber 12 to exit.

Advantageously, in exemplary and preferred, but non-limiting, embodiments of the invention, each cylinder 4A of each tool 10 is connected to a line connected to a hydropneumatic damping accumulator 9, which has the function of collecting the fluid in output from each cylinder 4A to perform the movement of the respective tool 10. Compressing the gaseous phase of the fluid inside the accumulator 9, it is possible to overcome the obstacle and subsequently restore the initial conditions, bringing the fluid back into the upper chamber 12 of the cylinder 4A in question and inserting the relative tool 10 back into the soil.

Still advantageously, a maximum pressure valve VM2 allows to preserve the accumulator 9, maintaining the overpressure value below a certain threshold; this is achieved by discharging a portion of the fluid flow generated by the lifting of the cylinders 4A of the tools 10 affected by the collision with an obstacle.

In a further embodiment, the accumulator 9 can be replaced or flanked by a special pressure regulator valve VRP1. Such a valve VRP1, once calibrated to the desired pressure, ensures that the pressure is maintained constant even in the event of one or more tools 10 encountering an obstacle. In such a case, in fact, the overpressure generated by the movement of the tool 10 and the consequent exit of fluid from the relative cylinder 4A is balanced thanks to a controlled discharge of a part of fluid which is poured into a return line T back to the hydraulic pump. As soon as the overpressure peak falls, the valve VRP1 reverses the fluid passage direction therein, restoring the amount of fluid previously output by the upper chambers 12 of the cylinders 4A and the pressure necessary to ensure that the tool 10 can be inserted back into the soil.

Advantageously, by manually acting on the valve VRP1, a user has the possibility of setting and/or adjusting the value of the pressure to be kept constant.

Still advantageously, the hydraulic system 5 according to the invention allows to use the same cylinders 4A used for the function of overcoming obstacles to generate a complete retraction of all the tools 10, aimed at minimising the dimensions during the road transport of the subsoiler 100.

As regards the opening and closing of the side sections of the frame 1 of the subsoiler 100, respective further cylinders 4B are activated.

In practice, the operation of the various processing steps of the subsoiler 100 is as follows.

In a first step of opening the subsoiler 100, from the transport position in which the side sections of the frame 1 are closed, the side sections are opened by driving the respective cylinders 4B.

Specifically, in such a step, the fluid is delivered to the hydraulic system 5 from a delivery duct P coming from the tractor and a solenoid valve EV5 is used, which is placed in two certain positions, respectively for opening or closing the cylinders 4B; the return of the fluid occurs by means of a return duct T to the tractor.

Then a loading step of the hydraulic system 5 follows, adapted to fill the upper chambers 12 of the cylinders 4A, during which the following actions are performed:
- delivery of the fluid into the system 5 from the delivery duct P;
- a maximum pressure valve VM1 (usually calibrated at 190-200 bar and placed at the inlet of the system 5) does not intervene (fluid does not pass therein);
- the pressure regulating valve VRP1 is placed in the fluid passage position towards a solenoid valve EV1. The valve VRP1 is calibrated to a certain operating pressure (usually between 90 and 120 bar) and adjusts the flow rate so as to maintain a constant set pressure value;
- the solenoid valve EV1 is positioned in the fluid passage position towards the upper chamber 12 of the cylinders 4A;
- the upper chamber 12 is filled and the lower chamber 11 of the cylinders 4A is emptied;
- a solenoid valve EV2 is placed in the passage position for the return of the fluid in the return conduit T.

In a subsequent working step, the maximum pressure valve VM1 remains inactive so that there is fluid circulation in the system 5 (the hydraulic system 5 is active and therefore envisages a continuous delivery of fluid from the tractor). In the case of an overpressure event, the maximum pressure valve VM1 opens and directly connects the delivery conduit P with the return conduit T. The same applies to the maximum pressure valve VM2, which intervenes only in the event of excessive overpressure in the accumulator 9 to lower the pressure value therein and prevent the damage thereof.

During the working step, the cylinders 4A determine the retraction of the tools 10 in the event of encountering obstacles, generating an exit of fluid from the upper chamber 12 and activating the damping function described above.

If the accumulator 9 is not present, the solenoid valve EV1 is placed in the fluid passage position from and towards the valve VRP1 and the valve VRP1 is placed in the fluid passage position towards the return conduit T.

As soon as the overload is exhausted (obstacle overcome), the valves VRP1 and EV1 return to the positions assumed during the loading step of the system 5, so as to restore the volume of fluid in output from the upper chamber 12 of the cylinders 4A.

That is, the overpressure generated by the collision of the tools 10 with the obstacle is balanced thanks to a controlled discharge of a part of fluid poured, from the upper chambers 12 of the cylinders 4A in question, into the return duct T towards the hydraulic pump to perform a retraction movement of one or more tools 10 affected by the collision with the obstacle.

Following the end of said overpressure, when the obstacle is overcome, the valve VRP1 reverses the fluid passage direction therein, bringing the fluid back into the upper chamber 12 of the cylinders (4A) in question to restore the movement of the tools (10) affected by the collision with the obstacle, returning them to the initial position.

This mechanism is therefore continuously repeated upon encountering obstacles and causes consequent retraction movements of the tools 10 and is simultaneously active on all the tools 10 of the subsoiler 100.

In the embodiment in which the accumulator 9 is present, the mechanism is analogous to that of the configuration without the accumulator 9 with the exception that the valve VRP1 is not activated; the exit of fluid from the upper chamber 12 of the cylinders 4A is in fact directed towards the accumulator 9 itself, which exerts its damping function with the displacement of a membrane present therein.

If the pressure exceeds a set limit value, the maximum pressure valve VM2 opens so as to avoid damaging the accumulator 9 due to the overpressure which may be created.

Finally, for road transport, in order to reduce the overall dimensions of the entire machine, a retraction step of all the tools 10 is provided. In practice, following the closure of the two side sections of the frame 1 of the subsoiler 100 by driving the relative cylinders 4B, the lower chambers 11 of the cylinders 4A are filled thanks to the opening of the solenoid valve EV2. Consequently, to allow the emptying of the upper chambers 12 of the cylinders 4A, the following actions occur:
- the solenoid valve EV1 is positioned in a fluid passage position towards the valve VRP1;
- the valve VRP1 is placed in the fluid passage position towards the return conduit T.;
- the solenoid valve EV2 is positioned in the fluid passage position towards the lower chambers 11 of the cylinders 4A;
- the delivery duct P is connected to the lower chambers 11 of the cylinders 4A to allow the closing of the tools 10;
- the exit of fluid from the upper chambers 12 of the cylinders 4A is discharged into the return duct T.

In all the steps described above, the solenoid valve EL1, placed upstream of the system 5, acts as a flow regulator; it is connected, by means of several pilot lines, to several points of the system 5 and, on the basis of the pressures required by the various users in such points, adjusts the total amount of fluid which must be introduced, discharging the surplus portion which arrives from the delivery duct P of the tractor.

In a particular coupling condition of the subsoiler 100 with tractors provided with a sensitive line (having an additional line relative to the traditional ones of the delivery and return distributors), the solenoid valve EL1 always remains closed and instead an additional pilot line PLS is used so as to act directly on the adjustment of the hydraulic pump, for example placed on the tractor, on the basis of the hydraulic demands of the pilot lines connected to the line PLS itself.

The features of the agricultural processing device object of the present invention therefore emerge clearly from the above description, as do the advantages.

Lastly, it is clear that numerous other variants can be made to the device in question, without thereby departing from the scope of the appended claims.

Where the construction features and techniques mentioned in the appended claims are followed by reference signs or numerals, such reference signs have been introduced with the sole aim of increasing the intelligibility of the claims themselves and, consequently, they do not have any limiting effect on the interpretation of each element identified, merely by way of example, by such reference signs.

## Claims

1. An agricultural processing machine comprising a tractor connected to a soil processing apparatus, such as a subsoiler (100), said soil processing apparatus being provided with a foldable frame (1) and a series of tools or shanks (10) adapted to process the soil, wherein:
- said frame (1) comprises a central portion and at least two side portions, said side portions being provided with said tools (10) arranged on one or more parallel rows and said side portions being movable, by actuating means, from a closed or resting configuration, according to which said side portions are arranged in a position raised from the ground and substantially in a vertical direction, to an open or working configuration, according to which said side portions are arranged aligned and substantially in a horizontal direction,
- means for retracting said tools (10) from the soil in the event of an obstacle present in the soil,
- means for moving said tools (10) inside the soil at different depths with reference to the position of at least one roller (15) placed in a position tangent to the soil level,
**characterised in that** said means for retracting said tools (10), said means for moving said tools (10) in the soil at different depths and said actuating means for moving said side portions of the frame (1) are connected to a single hydraulic system (5) containing a fluid, in particular oil, comprising a plurality of double-acting cylinders (4A, 4B), each of which has an upper chamber (12) and a lower chamber (11),
wherein each cylinder of a first series of said cylinders (4A) is connected to a respective tool (10) and to a line of said hydraulic system (5), said line being connected to a delivery duct (P) and to a return duct (T) of said hydraulic system (5) and also being connected to a pressure regulator valve (VRP1) and/or to a hydropneumatic accumulator (9),
and wherein said upper chambers (12) of said first series of cylinders (4A) are filled with fluid by means of said delivery duct (P) and by means of a first solenoid valve (EV1) configured to fill said upper chambers (12) and empty the lower chambers (11) of said first series of cylinders (4A) and a second solenoid valve (EV2) configured to send the fluid in said return duct (T).

2. The agricultural processing machine according to claim 1 when comprising said pressure regulator valve (VRP1), **characterised in that**, in the event of a collision with an obstacle in the soil by one or more of said tools (10), said pressure regulator valve (VRP1) is configured to maintain the pressure of the fluid in the system (5) constant, said pressure being set by a user acting on said pressure regulator valve (VRP1), so that the overpressure generated by said collision of the tool (10) is balanced thanks to a controlled discharge of a part of fluid poured from the upper chamber (12) of at least one cylinder (4A) of said first series of cylinders (4A) in said return duct (T) to perform a retraction movement of said one or more tools (10) affected by the collision with the obstacle.

3. The agricultural processing machine according to claim 2, **characterised in that** at the end of said overpressure, said pressure regulator valve (VRP1) reverses the fluid passage direction therein, bringing said fluid back in the upper chamber (12) of said at least one cylinder (4A) to restore the movement of said one or more tools (10) affected by the collision with the obstacle, returning it/them to the initial position.

4. The agricultural processing machine according to claim 1 when comprising said hydropneumatic accumulator (9), **characterised in that**, in the event of a collision with an obstacle in the soil by one or more of said tools (10), said hydropneumatic accumulator (9) has the function of collecting the fluid in output from the upper chamber (12) of at least one cylinder (4A) of said first series of cylinders (4A) to perform a retraction movement of said one or more tools (10) affected by the collision with the obstacle and to bring said fluid back in the upper chamber (12) of said at least one cylinder (4A) of said first series of cylinders (4A) to restore the movement of said one or more tools (10) affected by the collision with the obstacle, returning it/them to the initial position.

5. The agricultural processing machine according to claim 1, **characterised in that** said lower chambers (11) of said first series of cylinders (4A) are filled with fluid by means of said second solenoid valve (EV2), which connects said delivery duct (P) to said lower chambers (11) to allow the closure of said one or more tools (10) reducing the road dimensions of said soil processing apparatus, and said upper chambers (12) of said first series of cylinders (4A) are emptied of fluid by means of said first solenoid valve (EV1), which is configured to pass the fluid towards said pressure regulator valve (VRP1) and towards said return duct (T).

6. The agricultural processing machine according to claim 1, **characterised in that** said hydraulic system (5) comprises a maximum pressure valve (VM1), which is activated and directly connects said delivery duct (P) with said return duct (T) in the event of a fluid pressure value greater than a preset value.

7. The agricultural processing machine according to claim 1, **characterised in that** said hydraulic system (5) comprises a maximum pressure valve (VM2), which maintains the fluid pressure in the system (5) below a certain threshold and, in the event of a collision of one or more tools (10) against an obstacle in the soil, discharges a portion of the fluid flow in output from said first series of cylinders (4A) of the respective said one or more tools (10) affected by the collision with the obstacle so as to avoid damage due to overpressure in the accumulator (9).

8. The agricultural processing machine according to claim 1, **characterised in that** a third solenoid valve (EL1) is installed upstream of said hydraulic system (5), which acts as a flow regulator and is connected to several points of the hydraulic system (5), so as to regulate the total amount of fluid to be introduced into said points on the basis of the pressures required at said points.

9. The agricultural processing machine according to claim 1, **characterised in that** said hydraulic system (5) includes a dedicated pilot line (PLS).

10. The agricultural processing machine according to claim 1, **characterised in that** each cylinder of a second series of cylinders (4B) is driven by means of a fluid delivery in said delivery duct (P) and by a fourth solenoid valve (EV5), which is placed in two certain positions, respectively for opening or closing each cylinder of said second series of cylinders (4B), said second series of cylinders (4B) being connected to said side portions of said frame (1).

11. The agricultural processing machine according to at least one of the preceding claims, **characterised in that** said central portion and said side portions of said frame (1) comprise at least one pair of metal profiles (6) having the support function for said tools (10).

12. The agricultural processing machine according to claim 11, **characterised in that** said metal profiles (6) are formed by round tubular units around which perforated plates are welded, placed with a certain spacing, said metal profiles (6) being attached, for example by means of bolts, to reinforcement elements or longitudinal plates (7, 17).

13. The agricultural processing machine according to claim 12, **characterised in that** said longitudinal plates (7, 17) are arranged so as to be superimposed and/or interposed on said metal profiles (6).

## Patentansprüche

1. Landwirtschaftliches Arbeitsgerät, das einen Traktor umfasst, der mit einer Bodenbearbeitungsvorrichtung, wie z.B. einem Tieflockerer (100), verbunden ist, wobei die Bodenbearbeitungsvorrichtung mit einem klappbaren Rahmen (1) und einer Reihe von Werkzeugen oder Schäften (10) versehen ist, die zur Bearbeitung des Bodens geeignet sind, wobei:
- der Rahmen (1) einen Mittelteil und mindestens zwei Seitenteile umfasst, wobei die Seitenteile mit den Werkzeugen (10) versehen sind, die in einer oder mehreren parallelen Reihen angeordnet sind, und die Seitenteile durch Betätigungsmittel von einer geschlossenen oder Ruhekonfiguration, gemäß der die Seitenteile in einer vom Boden abgehobenen Position und im Wesentlichen in einer vertikalen Richtung angeordnet sind, in eine offene oder Arbeitskonfiguration, gemäß der die Seitenteile ausgerichtet und im Wesentlichen in einer horizontalen Richtung angeordnet sind, bewegbar sind,
- mittel zum Zurückziehen der Werkzeuge (10) aus dem Boden, wenn ein Hindernis im Boden vorhanden ist,
- mittel zum Bewegen der Werkzeuge (10) innerhalb des Bodens in verschiedenen Tiefen in Bezug auf die Position mindestens einer Rolle (15), die in einer Position tangential zur Bodenebene angeordnet ist,
**dadurch gekennzeichnet, dass** die Mittel zum Zurückziehen der Werkzeuge (10), die Mittel zum Bewegen der Werkzeuge (10) im Boden in verschiedenen Tiefen und die Betätigungsmittel zum Bewegen der Seitenteile des Rahmens (1) mit einem einzigen Hydrauliksystem (5) verbunden sind, das ein Fluid, insbesondere Öl, enthält und eine Vielzahl von doppelt wirkenden Zylindern (4A, 4B) umfasst, von denen jeder eine obere Kammer (12) und eine untere Kammer (11) aufweist,
wobei jeder Zylinder einer ersten Reihe der Zylinder (4A) mit einem entsprechenden Werkzeug (10) und mit einer Leitung des Hydrauliksystems (5) verbunden ist, wobei die Leitung mit einer Zuführungsleitung (P) und mit einer Rückführungsleitung (T) des Hydrauliksystems (5) verbunden ist und auch mit einem Druckregelventil (VRP1) und/oder mit einem Hydropneumatikspeicher (9) verbunden ist,
und wobei die oberen Kammern (12) der ersten Reihe von Zylindern (4A) mittels der Zufuhrleitung (P) und mittels eines ersten Magnetventils (EV1), das so konfiguriert ist, dass es die oberen Kammern (12) füllt und die unteren Kammern (11) der ersten Reihe von Zylindern (4A) entleert, und eines zweiten Magnetventils (EV2), das so konfiguriert ist, dass es das Fluid in die Rückführleitung (T) leitet, mit Fluid gefüllt werden.

2. Landwirtschaftliches Arbeitsgerät, nach Anspruch 1, wenn sie das Druckregelventil (VRP1) umfasst, **dadurch gekennzeichnet, dass** das Druckregelventil (VRP1) so konfiguriert ist, dass es im Falle einer Kollision eines oder mehrerer der Werkzeuge (10) mit einem Hindernis im Boden den Druck des Fluids im System (5) konstant hält, wobei der Druck durch einen Benutzer eingestellt wird, der auf das Druckregelventil (VRP1) einwirkt, so dass der durch die Kollision des Werkzeugs (10) erzeugte Überdruck dank eines kontrollierten Ablassens eines Teils des aus der oberen Kammer (12) mindestens eines Zylinders (4A) der ersten Reihe von Zylindern (4A) in die Rücklaufleitung (T) gegossenen Fluids ausgeglichen wird, um eine Rückzugsbewegung des einen oder der mehreren von der Kollision mit dem Hindernis betroffenen Werkzeuge (10) auszuführen.

3. Landwirtschaftliches Arbeitsgerät nach Anspruch 2, **dadurch gekennzeichnet, dass** am Ende des Überdrucks das Druckregelventil (VRP1) die Durchflussrichtung des Fluids umkehrt und das Fluid in die obere Kammer (12) des mindestens einen Zylinders (4A) zurückführt, um die Bewegung des einen oder der mehreren Werkzeuge (10), die von der Kollision mit dem Hindernis betroffen sind, wiederherzustellen und es/sie in die Ausgangsposition zurückzubringen.

4. Landwirtschaftliches Arbeitsgerät nach Anspruch 1, das den hydropneumatischen Speicher (9) umfasst, **dadurch gekennzeichnet, dass** im Falle einer Kollision mit einem Hindernis im Boden durch eines oder mehrere der Werkzeuge (10) der hydropneumatische Akkumulator (9) die Funktion hat, das aus der oberen Kammer (12) mindestens eines Zylinders (4A) der ersten Reihe von Zylindern (4A) austretende Fluid zu sammeln, um eine Rückzugsbewegung des einen oder der mehreren Werkzeuge (10), die von der Kollision mit dem Hindernis betroffen sind, auszuführen und das Fluid in die obere Kammer (12) des mindestens einen Zylinders (4A) der ersten Reihe von Zylindern (4A) zurückzubringen, um die Bewegung des einen oder der mehreren Werkzeuge (10), die von der Kollision mit dem Hindernis betroffen sind, wiederherzustellen, es/sie in die Ausgangsposition zurückzubringen.

5. Landwirtschaftliches Arbeitsgerät nach Anspruch 1, **dadurch gekennzeichnet, dass** die unteren Kammern (11) der ersten Reihe von Zylindern (4A) mittels des zweiten Magnetventils (EV2), das die Zuführungsleitung (P) mit den unteren Kammern (11) verbindet, mit Flüssigkeit gefüllt werden, um das Schließen des einen oder der mehreren Werkzeuge (10) zu ermöglichen, wodurch die Straßenabmessungen der Bodenverarbeitungsvorrichtung verringert werden, und die oberen Kammern (12) der ersten Reihe von Zylindern (4A) mittels des ersten Magnetventils (EV1), das so konfiguriert ist, dass es das Fluid zu dem Druckregelventil (VRP1) und zu der Rücklaufleitung (T) leitet, von Fluid entleert werden.

6. Landwirtschaftliches Arbeitsgerät nach Anspruch 1, **dadurch gekennzeichnet, dass** das hydraulische System (5) ein Maximaldruckventil (VM1) umfasst, das aktiviert wird und die Zufuhrleitung (P) mit der Rücklaufleitung (T) direkt verbindet, wenn der Wert des Flüssigkeitsdrucks größer ist als ein vorgegebener Wert.

7. Landwirtschaftliches Arbeitsgerät nach Anspruch 1, **dadurch gekennzeichnet, dass** das Hydrauliksystem (5) ein Maximaldruckventil (VM2) umfasst, das den Fluiddruck im System (5) unter einem bestimmten Schwellenwert hält und im Falle einer Kollision eines oder mehrerer Werkzeuge (10) mit einem Hindernis im Boden einen Teil des Fluidstroms in der Ausgabe der ersten Reihe von Zylindern (4A) des jeweiligen einen oder der mehreren Werkzeuge (10), die von der Kollision mit dem Hindernis betroffen sind, ablässt, um Schäden aufgrund von Überdruck im Akkumulator (9) zu vermeiden.

8. Landwirtschaftliches Arbeitsgerät nach Anspruch 1, **dadurch gekennzeichnet, dass** ein drittes Magnetventil (EL1) stromaufwärts des hydraulischen Systems (5) installiert ist, das als Durchflussregler wirkt und mit mehreren Punkten des hydraulischen Systems (5) verbunden ist, um die Gesamtmenge der in die Punkte einzuleitenden Flüssigkeit auf der Grundlage der an den Punkten erforderlichen Drücke zu regeln.

9. Landwirtschaftliches Arbeitsgerät nach Anspruch 1, **dadurch gekennzeichnet, dass** das Hydrauliksystem (5) eine dedizierte Pilotleitung (PLS) umfasst.

10. Landwirtschaftliches Arbeitsgerät nach Anspruch 1, **dadurch gekennzeichnet, dass** jeder Zylinder einer zweiten Reihe von Zylindern (4B) durch eine Flüssigkeitszufuhr in der genannten Zufuhrleitung (P) und durch ein viertes Magnetventil (EV5) angetrieben wird, das
in zwei bestimmten Positionen, um jeden Zylinder der zweiten Reihe von Zylindern (4B) zu öffnen bzw. zu schließen, wobei die zweite Reihe von Zylindern (4B) mit den Seitenteilen des Rahmens (1) verbunden ist.

11. Landwirtschaftliches Arbeitsgerät nach mindestens einem der vorhergehenden Ansprüche, **dadurch gekennzeichnet, dass** der Mittelteil und die Seitenteile des Rahmens (1) mindestens ein Paar von Metallprofilen (6) umfassen, die die Stützfunktion für die Werkzeuge (10) haben.

12. Landwirtschaftliches Arbeitsgerät nach Anspruch 11, **dadurch gekennzeichnet, dass** die Metallprofile (6) durch runde rohrförmige Einheiten gebildet werden, um die Lochbleche geschweißt sind, die in einem bestimmten Abstand angeordnet sind, wobei die Metallprofile (6) beispielsweise mit Hilfe von Bolzen an Verstärkungselementen oder Längsplatten (7, 17) befestigt sind.

13. Landwirtschaftliches Arbeitsgerät nach Anspruch 12, **dadurch gekennzeichnet, dass** die Längsplatten (7, 17) so angeordnet sind, dass sie auf den Metallprofilen (6) aufliegen und/oder zwischen ihnen angeordnet sind.

## Revendications

1. Dispositif de travail agricole comprenant un tracteur relié à un appareil de traitement du sol, tel qu'une sous-soleuse (100), ledit appareil de traitement du sol étant pourvu d'un cadre pliable (1) et d'une série d'outils ou de socs (10) adaptés au traitement du sol, dans lequel:
- ledit cadre (1) comprend une partie centrale et au moins deux parties latérales, lesdites parties latérales étant pourvues desdits outils (10) disposés sur une ou plusieurs rangées parallèles et lesdites parties latérales étant mobiles, par des moyens d'actionnement, d'une configuration fermée ou de repos, selon laquelle lesdites parties latérales sont disposées dans une position surélevée par rapport au sol et sensiblement dans une direction verticale, à une configuration ouverte ou de travail, selon laquelle lesdites parties latérales sont disposées dans l'alignement et sensiblement dans une direction horizontale,
- des moyens pour rétracter lesdits outils (10) du sol en cas de présence d'un obstacle dans le sol,
- des moyens pour déplacer lesdits outils (10) à l'intérieur du sol à différentes profondeurs par rapport à la position d'au moins un rouleau (15) placé dans une position tangente au niveau du sol,
**caractérisé en ce que** lesdits moyens de rétractation desdits outils (10), lesdits moyens de déplacement desdits outils (10) dans le sol à différentes profondeurs et lesdits moyens d'actionnement pour le déplacement desdites parties latérales du châssis (1) sont reliés à un seul système hydraulique (5) contenant un fluide, en particulier de l'huile, comprenant une pluralité de cylindres à double effet (4A, 4B), chacun d'eux ayant une chambre supérieure (12) et une chambre inférieure (11),
où chaque cylindre d'une première série de ces cylindres (4A) est connecté à un outil respectif (10) et à une ligne dudit système hydraulique (5), cette ligne étant connectée à un conduit de distribution (P) et à un conduit de retour (T) dudit système hydraulique (5) et étant également connectée à une soupape de régulation de pression (VRP1) et/ou à un accumulateur hydropneumatique (9),
et dans lequel lesdites chambres supérieures (12) de ladite première série de cylindres (4A) sont remplies de fluide au moyen dudit conduit de refoulement (P) et au moyen d'une première électrovanne (EV1) configurée pour remplir lesdites chambres supérieures (12) et vider les chambres inférieures (11) de ladite première série de cylindres (4A) et d'une seconde électrovanne (EV2) configurée pour envoyer le fluide dans ledit conduit de retour (T).

2. Dispositif de travail agricole selon la revendication 1 lorsqu'elle comprend ladite soupape régulatrice de pression (VRP1), **caractérisée en ce que**, en cas de collision avec un obstacle dans le sol par un ou plusieurs desdits outils (10), ladite soupape régulatrice de pression (VRP1) est configurée pour maintenir constante la pression du fluide dans le système (5), ladite pression étant réglée par un utilisateur agissant sur ladite soupape régulatrice de pression (VRP1), de sorte que la surpression générée par ladite collision de l'outil (10) soit équilibrée grâce à une décharge contrôlée d'une partie du fluide versé de la chambre supérieure (12) d'au moins un vérin (4A) de ladite première série de vérins (4A) dans ledit conduit de retour (T) pour effectuer un mouvement de rétraction dudit ou desdits outils (10) affectés par la collision avec l'obstacle.

3. Dispositif de travail agricole selon la revendication 2, **caractérisé en ce qu'**à la fin de ladite surpression, ladite soupape régulatrice de pression (VRP1) inverse le sens de passage du fluide dans celle-ci, ramenant ledit fluide dans la chambre supérieure (12) dudit au moins un cylindre (4A) pour rétablir le mouvement dudit ou desdits outils (10) affectés par la collision avec l'obstacle, en le(s) ramenant à la position initiale.

4. Dispositif de travail agricole selon la revendication 1 lorsqu'elle comprend ledit accumulateur hydropneumatique (9), **caractérisé en ce que**, en cas de collision avec un obstacle dans le sol par un ou plusieurs desdits outils (10), ledit accumulateur hydropneumatique (9) a pour fonction de recueillir le fluide en sortie de la chambre supérieure (12) d'au moins un cylindre (4A) de ladite première série de cylindres (4A) pour effectuer un mouvement de rétraction dudit ou desdits outils (10) affectés par la collision avec l'obstacle et de ramener ledit fluide dans la chambre supérieure (12) dudit au moins un cylindre (4A) de ladite première série de cylindres (4A) pour rétablir le mouvement dudit ou desdits outils (10) affectés par la collision avec l'obstacle, en le(s) ramenant à la position initiale.

5. Dispositif de travail agricole selon la revendication 1, **caractérisé en ce que** lesdites chambres inférieures (11) de ladite première série de cylindres (4A) sont remplies de fluide au moyen de ladite deuxième électrovanne (EV2), qui relie ledit conduit de refoulement (P) auxdites chambres inférieures (11) pour permettre la fermeture dudit ou desdits outils (10) réduisant les dimensions de la route dudit appareil de traitement du sol, et lesdites chambres supérieures (12) de ladite première série de cylindres (4A) sont vidées de fluide au moyen de ladite première électrovanne (EV1), qui est configurée pour faire passer le fluide vers ladite vanne régulatrice de pression (VRP1) et vers ledit conduit de retour (T).

6. Dispositif de travail agricole selon la revendication 1, **caractérisé en ce que** ledit système hydraulique (5) comprend une soupape de pression maximale (VM1), qui est activée et relie directement ledit conduit de refoulement (P) avec ledit conduit de retour (T) en cas de valeur de pression du fluide supérieure à une valeur prédéfinie.

7. Dispositif de travail agricole selon la revendication 1, **caractérisé en ce que** ledit système hydraulique (5) comprend une soupape de pression maximale (VM2), qui maintient la pression du fluide dans le système (5) en dessous d'un certain seuil et, en cas de collision d'un ou de plusieurs outils (10) contre un obstacle dans le sol, décharge une partie du flux de fluide en sortie de ladite première série de cylindres (4A) dudit ou desdits outils (10) respectifs affectés par la collision avec l'obstacle afin d'éviter des dommages dus à une surpression dans l'accumulateur (9).

8. Dispositif de travail agricole selon la revendication 1, **caractérisé en ce qu'**une troisième électrovanne (EL1) est installée en amont dudit système hydraulique (5), qui agit comme régulateur de débit et est reliée à plusieurs points du système hydraulique (5), de manière à réguler la quantité totale de fluide à introduire dans lesdits points sur la base des pressions requises auxdits points.

9. Dispositif de travail agricole selon la revendication 1, **caractérisé par le fait que** ledit système hydraulique (5) comprend une ligne pilote dédiée (PLS).

10. Dispositif de travail agricole selon la revendication 1, **caractérisé en ce que** chaque cylindre d'une deuxième série de cylindres (4B) est entraîné au moyen d'un refoulement de fluide dans ledit conduit de refoulement (P) et par une quatrième électrovanne (EV5), qui est placée
dans deux positions déterminées, respectivement pour ouvrir ou fermer chaque cylindre de ladite deuxième série de cylindres (4B), ladite deuxième série de cylindres (4B) étant reliée auxdites parties latérales dudit cadre (1).

11. Dispositif de travail agricole selon au moins l'une des revendications précédentes, **caractérisé en ce que** ladite partie centrale et lesdites parties latérales dudit châssis (1) comprennent au moins une paire de profils métalliques (6) ayant la fonction de support pour lesdits outils (10).

12. Dispositif de travail agricole selon la revendication 11, **caractérisé en ce que** lesdits profils métalliques (6) sont formés par des unités tubulaires rondes autour desquelles sont soudées des plaques perforées, placées avec un certain espacement, lesdits profils métalliques (6) étant fixés, par exemple au moyen de boulons, à des éléments de renforcement ou à des plaques longitudinales (7, 17).

13. Dispositif de travail agricole selon la revendication 12, **caractérisé en ce que** lesdites plaques longitudinales (7, 17) sont disposées de manière à être superposées et/ou interposées sur lesdits profilés métalliques (6).
